# NEUE EUROPÄISCHE PATENTSCHRIFT

(11) **EP 0 311 039 B2**
(45) Veröffentlichungstag und Bekanntmachung des Hinweises auf die Entscheidung über den Einspruch: **21.02.1996**
(45) Hinweis auf die Patenterteilung: 07.01.1993
(21) Anmeldenummer: 88116465.1
(22) Anmeldetag: 05.10.1988
(51) Int. Cl.: G01P 15/08, B60R 21/00

(54) **Schaltungsanordnung zum Erfassen von Beschleunigungen**
Circuit arrangement for the detection of accelerations
Circuit électrique de détection des accélérations

(30) Priorität: 07.10.1987 DE 3733837
(43) Veröffentlichungstag der Anmeldung: 12.04.1989
(73) Patentinhaber: TEMIC TELEFUNKEN microelectronic GmbH, D-74072 Heilbronn (DE)
(72) Erfinder: Spies, Hans, D-8068 Pfaffenhofen (DE); Wöhrl, Alfons, D-8898 Schrobenhausen (DE); Laucht, Horst, Dr., D-8206 Bruckmühl (DE); Hora, Peter, D-8898 Schrobenhausen (DE)
(74) Vertreter: Maute, Hans-Jürgen, Dipl.-Ing.

(56) Entgegenhaltungen:
- EP-A- 0 292 669
- DE-A- 2 207 831
- DE-A- 2 920 147
- DE-A- 3 001 780
- US-A- 3 701 903
- US-A- 3 980 318
- US-A- 4 166 641
- US-A- 4 381 829

## Beschreibung

### Beschrelbung

Die Erfindung bezieht sich auf eine Schaltungsanordnung zum Erfassen von Beschleunigungen gemäß dem Oberbegriff des Patentanspruches 1.

Derartige Schaltungsanordnungen werden in vielen Bereichen der Technik benötigt, so z.B. zum Erfassen von Beschleunigungen, die auf ein Kraftfahrzeug, einen Flugkörper oder ein Projektil wirken. Insbesondere für Kraftfahrzeuge haben derartige Schaltungsanordnungen in den letzten Jahren erhöhte Bedeutung erfahren, und zwar im wesentlichen in Verbindung mit passiven Sicherheitseinrichtungen, so z.B. Gurtstrammern oder Luftkissen, die bei einer Kollision des Fahrzeugs auf ein Hindernis die Kraftfahrzeuginsassen vor Verletzungen schützen sollen. Als Beschleunigungsaufnehmer werden z.B. piezoelektrische Kristalle verwendet, deren Ausgangssignale nach einer Schwellwertbegrenzung entsprechend ausgewertet werden. Eine solche Schaltungsanordnung ist etwa der DE-OS 22 07 831 zu entnehmen. Die Auswerteschaltung weist ein dem piezoelektrischen Beschleunigungsfühler nachgeschaltetes Schwellwertglied auf, das erst ab einer bestimmten Amplitude des Ausgangssignales des Beschleunigungsaufnehmers signaldurchlässig wird, ferner einen Vorverstärker, einen Integrator und einen ausgangsseitigen Schwellwertschalter. Neben einer einfachen Integration, wonach das Ausgangssignal der Auswerteschaltung einer kritischen Geschwindigkeit entspricht, ist auch eine doppelte Integration möglich, so daß das Ausgangssignal der Auswerteschaltung einem kritischen Weg entspricht. Eine Anordnung mit den Merkmalen des ersten Teiles von Anspruch 1 ist aus der DE-A-29 20 147 bekannt.

Bei Kraftfahrzeugen werden nicht nur die erwähnten passiven Sicherheitseinrichtungen zum Schutz der Insassen eingesetzt, vielmehr wird das Kraftfahrzeug auch mit aktiven Sicherheitseinrichtungen versehen, so z.B. spezielle Ausgestaltungen der Stoßstangen oder mit Knautschzonen, womit bereits ein erheblicher Anteil der bei einem Aufprall des Kraftfahrzeuges auftretenden Energie absorbiert wird. Da insbesondere die Knautschzonen von Kraftfahrzeugtyp zu Kraftfahrzeugtyp je nach dem zugrundeliegenden Konzept unterschiedlich ausgestaltet sind, besteht das Bedürfnis, die Schaltungsanordnung für die passiven Sicherheitseinrichtungen entsprechend an die Kraftfahrzeugkonstruktion anzupassen. Hierbei ist es unumgänglich, mehrere Beschleunigungsfühler vorzusehen, die an verschiedenen Stellen der Kraftfahrzeugkonstruktion angebracht sind, um auf diese Weise die passiven Sicherheitseinrichtungen gezielt auslösen zu können.

Der Erfindung liegt die Aufgabe zugrunde, eine Schaltungsanordnung der in Rede stehenden Art anzugeben, die auf einfache Weise in unterschiedlichen Kraftfahrzeugkonstruktionen eingesetzt werden kann.

Diese Aufgabe ist gemäß der Erfindung durch die im kennzeichnenden Teil des Patentanspruches 1 angegebenen Merkmale gelöst.

Demgemäß werden die einzelnen Beschleunigungsaufnehmer mit ihren Hauptempfindlichkeitsachsen in unterschiedlichen Winkellagen ausgerichtet, und die Ausgangssignale der einzelnen Beschleunigungsaufnehmer werden einer Auswahlschaltung innerhalb der Auswerteschaltung zugeführt, die aus den Ausgangssignalen der Beschleunigungsaufnehmer das betragsmäßig größte ermittelt und auswählt, und gemeinsam mit einem Vorzeichensignal an eine Logik weiterleitet. Je nach der Verbindung der Beschleunigungsaufnehmer mit der Auswerteschaltung kann durch die gezielte Auswahl und Behandlung der Ausgangssignale eine winkelabhängige Auswertung der Beschleunigung er-folgen und aufgrund dieser Bewertung die Sicherheitseinrichtung z.B. eines Kraftfahrzeugs gezielt ausgelöst werden.

Die Auswahlschaltung kann analog, digital oder gemischt analog-digital aufgebaut werden, Im ersten Falle werden zur Realisierung der Auswahlbzw. Extremwertschaltung Differenzverstärker verwendet, die aus dem Vergleich der zugeführten Aufnehmersignale Schalter steuern, durch die das jeweils ausgewählte Ausgangssignal, vorzugsweise das jeweils größte positive bzw. größte negative Ausgangssignal zur weiteren Verarbeitung weiterliefern. Wird die Schaltung digital aufgebaut, so wird diese Auswahl mit Hilfe eines elektronischen Matrixbausteines getroffen, der von einem Mikroprozessor angesteuert wird und lediglich das ausgewählte Signal weiterleitet. Nach einer Analog/Digitalwandlung können dann die ausgewählten Signale im Mikroprozessor weiterbehandelt werden. Eine Programmierung ist dabei möglich und erleichtert die Anpassung der Einrichtung an unterschiedliche Fahrzeugtypen.

Weitere Ausgestaltungen der Erfindung gehen aus den abhängigen Patentansprüchen hervor.

Die Erfindung ist in Ausführungsbeispielen anhand der Zeichnung näher erläutert. In dieser stellen dar:
Figur 1 ein Gesamtkennliniendiagramm zweier Beschleunigungsaufnehmer, die in einer Ebene mit ihren Hauptempfindlichkeitsachsen in unterschiedlichen Winkeln ausgerichtet sind;
Figur 2 eine schematische analog arbeitende Auswerteschaltung für die Eingangssignale zweier Beschleunigungsaufnehmer,
Figur 3 eine ebenfalls analog arbeitende nicht erfindungsgemäße Größtwertschaltung für die-Signale dreier Beschleunigungsaufnehmer;
Figur 4 eine andere Ausführungsform einer nicht erfindungsgemäßer analog arbeitenden Größtwertschaltung für die Signale ebenfalls dreier Beschleunigungsaufnehmer;
Figuren 5 bis 10 Kennliniendiagramme für mehrere Beschleunigungsaufnehmer;
Figur 11 ein Blockschaltbild einer digital arbeitenden Auswerteschaltung für die Signale mehrerer Beschleunigungsaufnehmer.

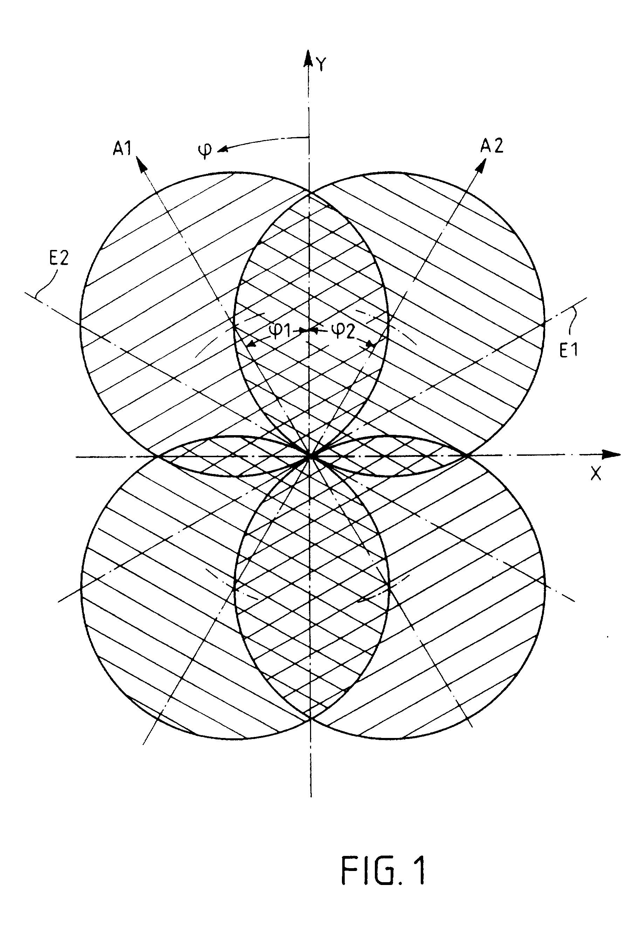

Das in Figur 1 dargestellte Kennliniendiagramm ist ein Diagramm für zwei nicht gezeigte Beschleunigungsaufnehmer, die gegenüber der Y-Richtung, z.B. der Fahrtrichtung eines Kraftfahrzeugs, in einer Ebene unter in diesem Falle entgegengesetzt gleichen Winkeln φ1 bzw. φ2 von in diesem Falle ± 30° ausgerichtet sind. Die Hauptempfindlichkeitsachsen der Beschleunigungsaufnehmer sind mit A1 bzw. A2 bezeichnet. Senkrecht zu diesen Achsen sind noch die zur Zeichenebene senkrechten Symmetrieebenen E1 und E2 für die beiden Beschleunigungsaufnehmer eingezeichnet.

Bei den Beschleunigungsaufnehmern wurde davon ausgegangen, daß die Aufnehmercharakteristik in positiver und negativer Richtung kugelsymmetrisch ist, wobei die vier hier als Kreise zu sehenden Kugeln jeweils durch den Nullpunkt des X-Y-Koordinatensystems laufen. Die Kennliniendiagramme sind für den Aufnehmer 1 mit der Hauptempfindlichkeitsachse A1 senkrecht zu dieser schraffiert, für den Aufnehmer 2 mit der Hauptempfindlichkeitsachse A2 senkrecht zu dieser schraffiert. In den kreuzschraffierten Bereichen überlappen sich die Kennliniendiagramme.

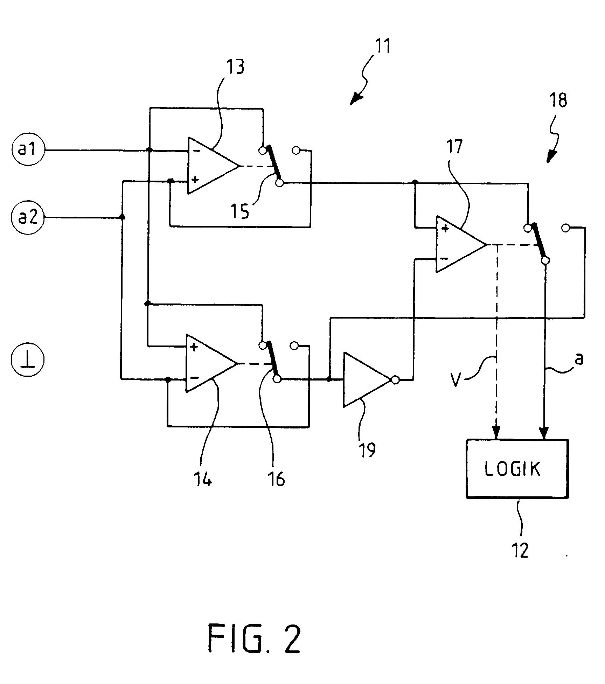

In Fig. 2 ist eine Auswerteschaltung für die Signale a1 und a2 der Beschleunigungsaufnehmer in gemischt analog-digitaler Ausführung dargestellt. Diese Auswerteschaltung besteht aus einer Auswahlschaltung 11 und einer Logik 12. Die Auswahlschaltung ist in dem Falle eine Größtwertschaltung und weist als Eingangsglieder zwei Differenzverstärker 13 und 14 auf, wobei das Signal a1 einmal dem negativen Eingang des Differenzverstärkers 13 und zum anderen dem positiven Eingang des Differenzverstärkers 14 zugeführt wird. Das Signal a2 wird dem positiven Eingang des Differenzverstärkers 13 und dem negativen Eingang des Differenzverstärkers 14 zugeführt. Die Differenzverstärker 13 und 14 steuern jeweils einen Schalter 15 bzw. 16 zwischen zwei Stellungen, wobei in der einen Stellung das Signal a1 und in der anderen Stellung das Signal a2 über den Mittenkontakt zur weiteren Auswertung weitergeleitet wird. Hierzu sind die beiden Eingänge der Differenzverstärker jeweils mit den beiden Schaltkontakten der beiden Schalter verbunden. Der Mittenkontakt des Schalters 15 wird mit dem positiven Eingang eines weiteren Differenzverstärkers 17 und gleichzeitig mit einem Schaltkontakt eines weiteren Schalters 18 verbunden. Der Mittenkontakt des zweiten Schalters 16 wird einmal mit dem zweiten Schaltkontakt des Schalters 18 und zum anderen über einen Inverter 19 mit dem negativen Eingang des Differenzverstärkers 17 verbunden.

Je nach der Schaltcharakteristik der verwendeten Schalter 15, 16 und 18 liegt dann am Mittenkontakt des letzten Schalters 18 das ausgewählte Signal a sowie am Ausgang des letzten Differenzverstärkers 17 ein Vorzeichensignal V für das ausgewählte Signal a an. Diese beiden Signale werden der Logik 12 zugeführt und können dort nach weiteren Kriterien behandelt werden.

Die Beschaltung des Differenzverstärkers 13 kann bei der Schaltung gemäß Figur 2 als Größtwertschaltung, diejenige des Differenzverstärkers 14 als Kleinstwertschaltung bezeichnet werden. Ist das Signal a1 größer als das Signal a2. so ist der Schalter 15 in der in Figur 2 gezeigten Stellung, d.h. das Signal a1 wird über den Mittenkontakt des Schalters 15 weitergeleitet. Durch den Differenzverstärker 14 wird das kleinste Signal, in diesem Falle das Signal a2 ausgewählt und über den Mittelkontakt des Schalters 16 weitergeleitet. Um auf der Eingangsseite des Differenzverstärkers 17 gleiche Vorzeichen zu erhalten, wird der Inverter 19 dem Schalter 16 nachgeschaltet. Da in diesem Falle das Signal a1 das größere Signal ist, wird dieses über den letzten Schalter 18 der Logik zugeführt; man sieht unmittelbar, daß man in diesem Falle als Vorzeichensignal ein positives Signal erhält. Wäre al negativ und a2 ein positives Signal, so würde erst am Differenzverstärker 17 definiert, welches der beiden Signale weitergeleitet wird. Ist der Betrag von a1 größer als derjenige von a2, so würde wiederum a1 weitergeleitet, diesmal mit einem negativen Vorzeichensignal, wäre der Betrag von a2 größer als derjenige von a1, so würde a2 mit dem entsprechenden Vorzeichen an die Logik 12 gegeben.

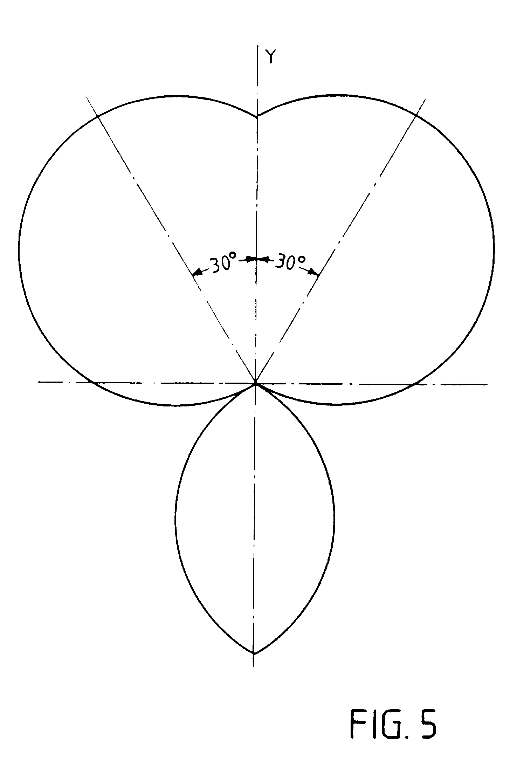

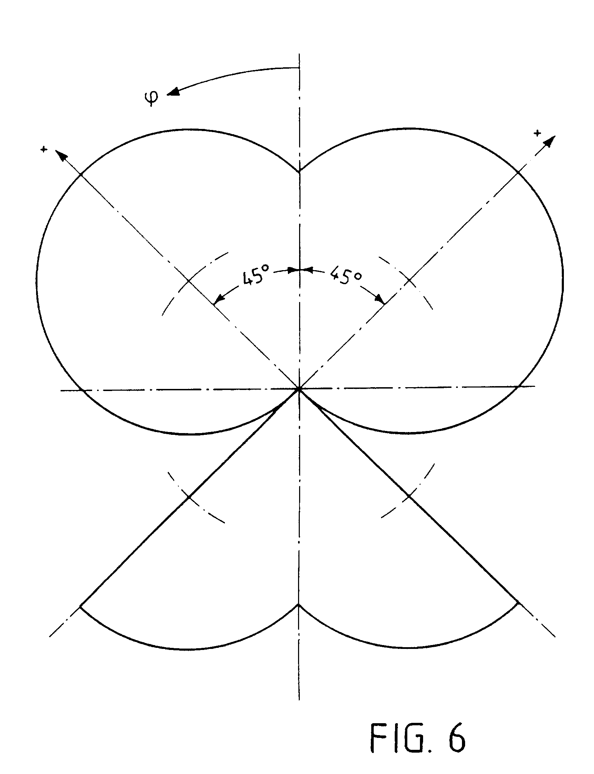

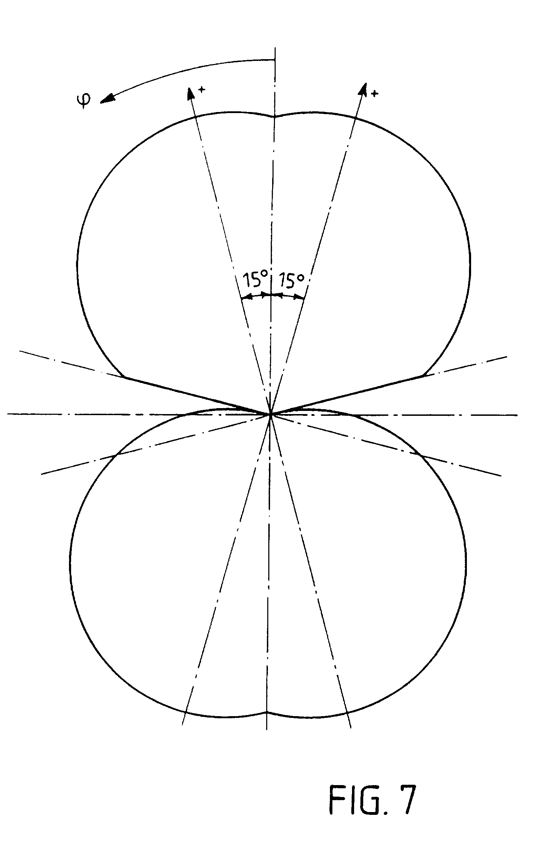

Durch entsprechende Auswahlkriterien für die Funktion der Differenzverstärker und Schalter können abweichend von der beanspruchten Erfindung aus dem Gesamtkennliniendiagramm gemäß der Figur 1 spezifische Kennlinien gemäß den Figuren 5 bis 9 erreicht werden, die alle für eine Anordnung mit zwei Beschleunigungsaufnehmern gelten. In Figur 5 sind die Beschleunigungsaufnehmer gegenüber der Fahrtrichtung Y wie in Figur 1 in Winkeln von ± 30° angeordnet, in Figur 6 beträgt dieser Winkel 45° und in Figur 7 ± 15°.

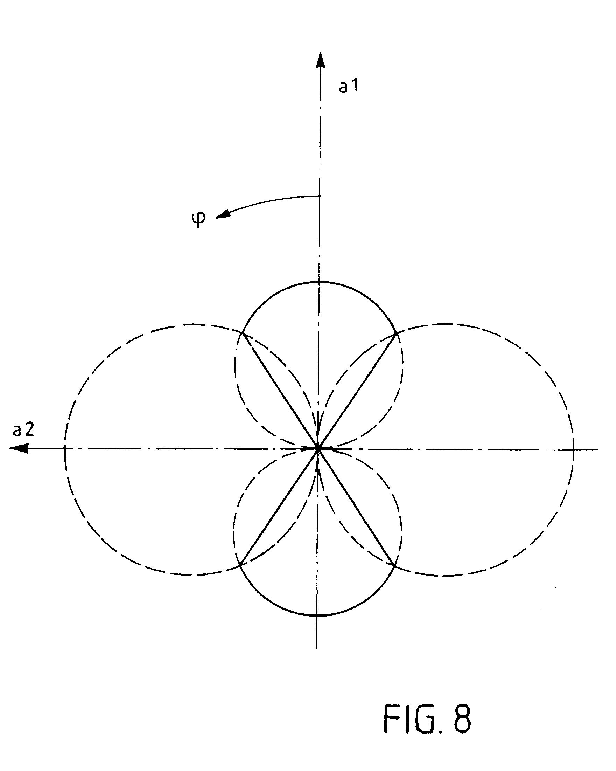

Das Kennlinienprogramm gemäß Figur 8 wird aus den Diagrammen zweier Beschleunigungsaufnehmer gewonnen, die in einer Ebene unter einem Winkel von 90° zueinander angeordnet sind. Die Aufnehmercharakteristika sind hierbei nicht gleich. Die vollen Kennliniendiagramme eines jeden Beschleunigungsaufnehmers sind jeweils die Doppelkreise längs der Hauptempfindlichkeitsachsen A1 und A2, wobei diese Doppelkreise wieder rotationssymmetrisch um diese Achsen zu denken sind. Man sieht, daß die Radien dieser Doppelkreise bzw. die Radien der Kugeln nicht gleich sind. Durch Subtraktion und Addition können bestimmte Bereiche der Kennliniendiagramme ausgeblendet werden, so daß die beiden gegenüberliegenden sphärischen Dreiecke für die Auswertung von Beschleunigungen wirksam bleiben.

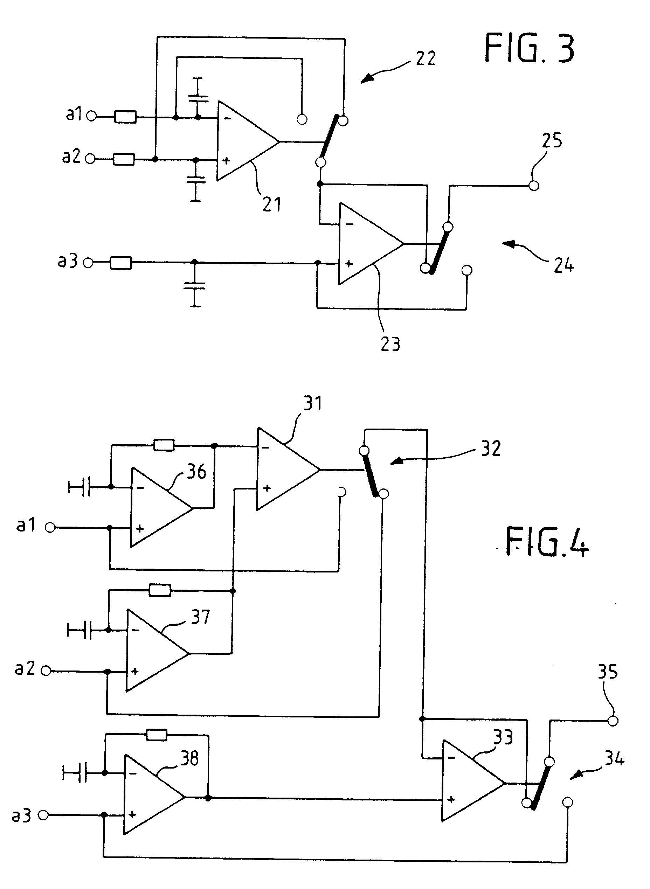

In Figur 3 ist eine nicht erfindungsgemäße Größtwertschaltung in gemischt analog-digitaler Ausführung für drei Signale a1, a2 und a3 dreier nicht gezeigter Beschleunigungsaufnehmer dargestellt. Die Signale a1 und a2 der beiden ersten Aufnehmer werden über jeweils einen Vorwiderstand dem negativen bzw. positiven Eingang eines Differenzverstärkers 21 und gleichzeitig den beiden Schaltkontakten eines Schalters 22 zugeführt. Der Mittenkontakt dieses Schalters ist mit dem negativen Eingang eines weiteren Differenzverstärkers 23 verbunden, dessen positivem Eingang das Signal a3 zugeführt wird. Die gezeigten Vorwiderstände und Kondensatoren dienen der Anpassung. Dieses Signal a3 wird einem Schaltkontakt eines weiteren, dem Differenzverstärker 23 nachgeschalteten Schalters 24 zugeführt, mit dessem anderen Schaltkontakt der Mittenkontakt des Schalters 22 verbunden ist. Der Mittenkontakt dieses letzten Schalters 24 ist mit einem Ausgangsanschluß 25 dieser Größtwertschaltung verbunden. Aus der Stellung der Schalter 22 und 24 kann unmittelbar entnommen werden, daß das Signal a2 in diesem Falle das größte Signal ist und zum Ausgang 25 der Schaltung weitergeleitet wird.

Eine Variante einer weiteren Größtwertschaltung in gemischt analog-digitaler Ausführung für drei Eingangssale a1, a2 und a3 ist in Figur 4 dargestellt. Der nicht erfindungsgemäße Schaltungsaufbau weist wiederum zwei Differenzverstärker 31 und 33 zum Vergleich der Signale a1 und a2 bzw. des Signales a3 und des im Differenzverstärker 31 bewerteten Vergleichssignales auf. Den Differenzverstärkern 31 und 33 ist jeweils ein Schalter 32 bzw. 34 entsprechend den Schaltern 22 und 24 in Figur 3 nachgeschaltet. Der Ausgang der Schaltung ist mit 35 bezeichnet. Der Unterschied dieser Schaltungsanordnung gemäß Figur 4 besteht darin, daß sämtliche Signale a1, a2 und a3 jeweils noch einem Vorverstärker 36, 37 bzw. 38 zugeführt werden, die zusätzlich einen unteren Schwellwert fest-legen. Ansonsten ist die Auswertung die gleiche wie bei dem Beispiel zu Figur 3.

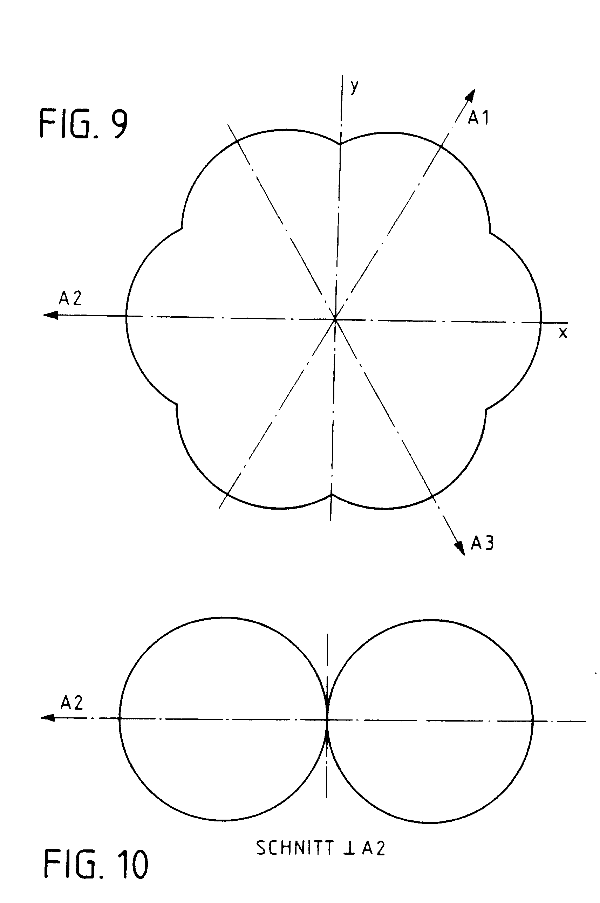

Mit den Auswahlschaltungen gemäß den Figuren 3 und 4 kann eine Aufnehmeranordnung aus drei Beschleunigungsaufnehmern verbunden werden, deren Kennliniendiagramm in den Figuren 9 und 10 gezeigt ist. Die Hauptempfindlichkeitsachse A1 des ersten nicht gezeigten Beschleunigungsaufnehmers ist mit einem Winkel von -30° gegen die Fahrtrichtung y in der horizontalen Ebene geneigt, die Hauptempfindlichkeitsachse A2 des zweiten Beschleunigungsaufnehmers liegt in der (-x)-Richtung und die Hauptempfindlichkeitsachse A3 liegt ebenfalls in der horizontalen Ebene gegenüber der Fahrtrichtung y unter einem Winkel von -150°. In Figur 10 ist ein Schnitt in einer Ebene senkrecht zu der Hauptempfindlichkeitsachse A2 gezeigt, aus der nochmals die Kugelsymmetrie der Kennliniendiagramme hervorgeht.

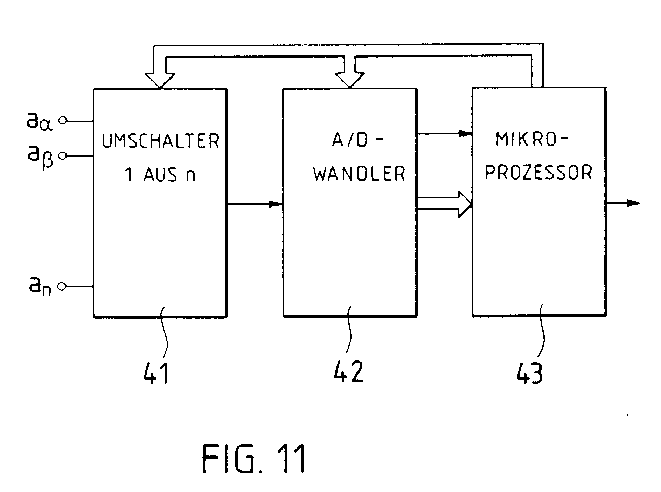

In Figur 11 ist eine programmierbare Schaltungsanordnung zur digitalen Bewertung der Ausgangssignale von n Beschleunigungsaufnehmern dargestellt. Die Ausgangssignale a1, a2,..., an der einzelnen Beschleunigungsaufnehmer werden einem Umschalter 41 ohne oder mit n-facher Sample- and Hold-Funktion zugeführt. In dieser Schaltung 41 wird durch den Mikroprozessor 43 dasjenige Ausgangssignal abgerufen, das von der Schaltung 42 zu digitalisieren und dem Mikroprozessor 43 bereitzustellen ist. Der Mikroprozessor 43 übernimmt die von der Schaltung 42 digitalisierten und bereitgestellten Signale und verarbeitet diese mit Hilfe eines gemäß den Anforderungen der Patentansprüche wirkenden Programmteiles (Software). Andere Teile des Gesamtprogrammes führen andere Aufgaben aus.

Die beschriebenen Schaltungselemente sind selbstverständlich beispielhaft. Die Schaltungen können auch durch andere elektronische Baugruppen o.dgl. ersetzt werden, sofern nur die gleiche oder ähnliche Schaltungsfunktion erfüllt wird, die etwa durch eine fest vorgegebene oder programmierbare Software vorgegeben wird.

## Patentansprüche

1. Schaltungsanordnung zum Erfassen von Beschleunigungen, die auf einen Körper einwirken, mit wenigstens zwei am Körper angeordneten Beschleunigungsaufnehmern mit bestimmter, um eine Hauptempfindlichkeitsachse (A) verteilter Aufnehmercharakteristik sowie mit einer Auswerteschaltung (11, 12; 41, 42, 43) für die Ausgangssignale (a) der Beschleunigungsaufnehmer, wobei die Beschleunigungsaufnehmer mit ihren Hauptempfindlichkeitsachsen (A) in unterschiedlichen Winkellagen (φ) ausgerichtet und sämtlich direkt mit der Auswerteschaltung verbunden sind, dadurch gekennzeichnet, daß die Auswerteschaltung (11, 12; 41, 42, 43) eine Logik (12) und eine Auswahlschaltung (11; 41) aufweist, der zur Auswahl eines Ausgangssignales (a) die Ausgangssignale der Beschleunigungsaufnehmer als Eingangssignale zugeführt sind und die so ausgebildet ist, daß die Ausgangssignale direkt miteinander verglichen werden und daß als Ergebnis der Auswahl dasjenige Eingangssignal zusammen mit einem zugehörigen Vorzeichensignal (V) an die Logik (12) weitergegeben wird, das die betragsmäßig größte Amplitude aufweist.

2. Schaltungsanordnung nach Anspruch 1, dadurch gekennzeichnet, daß sämtliche verwendeten Beschleunigungsaufnehmer die gleiche Aufnehmercharakteristik aufweisen.

3. Schaltungsanordnung nach Anspruch 1, dadurch gekennzeichnet, daß die verwendeten Beschleunigungsaufnehmer unterschiedliche Aufnehmercharakteristiken aufweisen.

4. Schaltungsanordnung nach Anspruch 1, dadurch gekennzeichnet, daß die Auswerteschaltung (11, 12) analog aufgebaut ist.

5. Schaltungsanordnung nach Anspruch 1, dadurch gekennzeichnet, daß die Auswerteschaltung (42, 43) digital aufgebaut ist.

6. Schaltungsanordnung nach Anspruch 1 , dadurch gekennzeichnet, daß die Auswerteschaltung (41, 42, 43) gemischt analog und digital aufgebaut ist.

7. Schaltungsanordnung nach Anspruch 5 oder 6, dadurch gekennzeichnet, daß die Auswerteschaltung (41, 42, 43) programmierbar ist.

## Claims

1. A circuit arrangement for the detection of accelerations which act upon a body, with at least two acceleration sensors arranged on the body and having a specified sensor characteristic distributed about a main sensitivity axis (A) and with an evaluation circuit (11, 12; 41, 42, 43) for the output signals (a) of the acceleration sensors, where the acceleration sensors are aligned, in respect of their main sensitivity axes (A), in different angular positions (φ) and are all directly connected to the evaluation circuit, characterised in that the evaluation circuit (11, 12; 41, 42, 43) comprises a logic circuit (12) and a selector circuit (11; 41) which latter, for the selection of an output signal (a), is supplied with the output signals of the acceleration sensors as input signals and is designed such that the output signals are directly compared with one another, and that as a result of the selection that input signal which has the amplitude which is greatest in amount is forwarded, together with an associated sign signal (V), to the logic circuit (12).

2. A circuit arrangement as claimed in Claim 1, characterised in that all the acceleration sensors which are used possess the same sensor characteristic.

3. A circuit arrangement as claimed in Claim 1, characterised in that the acceleration sensors which are used possess different sensor characteristics.

4. A circuit arrangement as claimed in Claim 1, characterised in that the evaluation circuit (11, 12) is of analogue construction.

5. A circuit arrangement as claimed in Claim 1, characterised in that the evaluation circuit (42, 43) is of digital construction.

6. A circuit arrangement as claimed in Claim 1, characterised in that the evaluation circuit (41, 42, 43) is of mixed analogue and digital construction.

7. A circuit arrangement as claimed in Claim 5 or 6, characterised in that the evaluation circuit (41, 42, 43) is programmable.

## Revendications

1. Agencement de circuit pour la détection d'accélérations, qui agissent sur un corps, comportant au moins deux capteurs d'accélération agencés au corps, avec caractéristique de capteur déterminée, répartie autour d'un axe de sensibilité principale (A), ainsi qu'un circuit d'évaluation (11, 12 ; 41, 42, 43) pour les signaux de sortie (a) des capteurs d'accélération, les capteurs d'accélération étant orientés, avec leurs axes de sensibilité principale (A), dans différentes positions angulaires (φ) et étant tous ensemble reliés directement avec le circuit d'évaluation, caractérisé en ce que le circuit d'évaluation (11, 12 ; 41, 42, 43) présente une logique (12) et un circuit de sélection (11 ; 41), auquel, pour la sélection d'un signal de sortie (a), les signaux de sortie des capteurs d'accélération sont amenés comme des signaux d'entrée, et qui est ainsi constitué, que les signaux de sortie sont comparés directement les uns avec les autres et que, comme résultat de la sélection, est retransmis à la logique (12), ensemble avec un signal de polarité (V) associé, celui des signaux d'entrée qui présente, au point de vue valeur, la plus grande amplitude.

2. Agencement de circuit selon la revendication 1, caractérisé en ce que, tous ensemble, des capteurs d'accélération employés présentent la même caractéristique de capteur.

3. Agencement de circuit selon la revendication 1, caractérisé en ce que les capteurs d'accélération employés présentent des caractéristiques de capteur différentes.

4. Agencement de circuit selon la revendication 1, caractérisé en ce que le circuit d'évaluation (11, 12) est constitué analogique.

5. Agencement de circuit selon la revendication 1, caractérisé en ce que le circuit d'évaluation (42, 43) est constitué numérique.

6. Agencement de circuit selon la revendication 1, caractérisé en ce que le circuit d'évaluation (41, 42, 43) est constitué mixte, analogique et numérique.

7. Agencement de circuit selon la revendication 5 ou la revendication 6, caractérisé en ce que le circuit d'évaluation (41, 452, 43) est susceptible d'être programmé.
